# EUROPÄISCHE PATENTSCHRIFT

(11) **EP 0 475 497 B1**
(45) Veröffentlichungstag und Bekanntmachung des Hinweises auf die Patenterteilung: **01.05.1996**
(21) Anmeldenummer: 91202176.3
(22) Anmeldetag: 28.08.1991
(51) Int. Cl.: H04J 3/07

(54) **Stopfentscheidungsschaltung für eine Anordnung zur Bitratenanpassung**
Stuffing decision circuit for a bit rate adaption apparatus
Circuit de décision de justification pour un dispositif d'adaption de débit binaire

(30) Priorität: 04.09.1990 DE 4027967
(43) Veröffentlichungstag der Anmeldung: 18.03.1992
(73) Patentinhaber: Philips Patentverwaltung GmbH, D-22335 Hamburg (DE); Philips Electronics N.V., NL-5621 BA Eindhoven (NL)
(72) Erfinder: Urbansky, Ralph, Dr.-Ing., W-8501 Schwaig 2 (DE)
(74) Vertreter: Volmer, Georg, Dipl.-Ing.

(56) Entgegenhaltungen:
- DE-A- 3 315 372
- DE-A- 4 013 317
- US-A- 4 002 844
- US-A- 4 546 429

## Beschreibung

Die Erfindung betrifft eine Stopfentscheidungsschaltung für eine Anordnung zur Bitratenanpassung zweier Signale. Die Anordnung zur Bitratenanpassung enthält
- einen elastischen Speicher, der dafür vorgesehen ist, daß in ihn die Daten eines ersten Signals in Gruppen von je n Bits (n ≥ 1) parallel eingeschrieben und parallel wieder ausgelesen werden,
- eine Auswahlmatrix zur Einfügung von Stopfbits, die dem elastischen Speicher nachgeschaltet ist,
- einen Schreibzähler zur Steuerung des Schreibvorganges und einen Lesezähler zur Steuerung des Lesevorganges,
- einen Subtrahierer, der dafür vorgesehen ist, die Differenz der Zählerstände zu bilden,
- einen Regelkreis, der den Subtrahierer, einen Regler und den Lesezähler umfaßt.

Eine Stopfentscheidungsschaltung mit den genannten Merkmalen ist aus der DE-A 39 22 897 bekannt. Eine solche Schaltungsanordnung wird in der Nachrichtenübertragungstechnik zum Beispiel bei plesiochronen Multiplexern benötigt,um die plesiochrone Signale zu bündeln. Zwei binäre Signale heißen plesiochron, wenn ihre Bitraten nominell gleich sind, tatsächlich aber innerhalb einer gegebenen Toleranz vom Nennwert abweichen können. Bevor plesiochrone Signale durch einen plesiochronen Multiplexer zusammengefasst werden, müssen sie alle auf die gleiche Bitrate gebracht werden, die (bei sogenannter positiver Stopftechnik) höher liegt als die Bitrate, die die einzelnen plesiochronen Signale haben. Dieser Bitratenunterschied wird unter anderem dadurch ausgeglichen, daß im Signal mit höherer Bitrate von Zeit zu Zeit sogenannte Stopfbits aufgenommen werden.

Damit derartige Stopfbits nach dem Demultiplexen wieder entfernt werden können, muß das Signal mit höherer Bitrate nach Rahmen strukturiert sein. Rahmen, an die hier besonders gedacht ist, sind die sogenannten synchronen Transportmoduln STM-N (vergleiche hierzu die CCITT-Empfehlungsentwürfe G 707, G 708, G 709). Ein solcher Rahmen ist nach Zeilen gegliedert und jede Zeile wiederum nach Bytes strukturiert. In diesem Rahmen sind neben Stopfstellen für sogenannte feste Stopfbits auch Stopfstellen für variable Stopfbits vorgesehen. Die Stopfstellen für feste Stopfbits müssen immer mit einem Stopfbit versehen werden, während die Stellen für die variablen Stopfbits entweder - je nach Entscheidung der Stopfentscheidungsschaltung - mit einem Informationsbit oder einem Stopfbit besetzt werden.

Bei der bekannten Schaltungsanordung wird das Eingangssignal durch einen Serien-Parallel-Wandler in acht (n = 8) parallele Bits - also in Bytes - gewandelt und byteweise in einen elastischen Speicher eingeschrieben. Die folgenden Ausführungen beschränken sich der formalen Einfachheit halber auf den Fall n = 8, da der Fachmann ohne weiteres in der Lage ist, die Ausführungen auf die Fälle n ≠ 8 zu übertragen. Sowohl die Schreibvorgänge als auch die Lesevorgänge werden von Zählern (Schreib- bzw. Lesezähler genannt) gesteuert, die von Bytetakten getaktet werden. Die Serien-Parallel-Wandlung hat den Zweck, möglichst viele Teile der gesamten Anordnung in leistungssparender CMOS-Technologie ausführen zu können.

Das Problem, in einem parallelen Bitstrom von acht parallelen Bits, Bits an vorbestimmter Stelle zu stopfen, wird bei der bekannten Schaltungsanordung durch eine steuerbare Auswahlmatrix gelöst. Die genaue Beschreibung der Auswahlmatrix findet man z.B. in der DE-A 39 20 391.

Ein weiteres, bei der bekannten Schaltung auftretendes Problem ist das, die variablen Stopfbits so zu legen, daß sie möglichst gleichmäßig im Signal mit der höheren Bitrate verteilt sind. Eine ungleichmäßige Verteilung der Bits führt nämlich zu niederfrequentem Jitter beim Demultiplexen. Dieser Jitter läßt sich mit einfachen Mitteln nicht mehr beseitigen. Eine gleichmäßige Verteilung der Stopfbits ist insofern schwierig, als der Subtrahierer den Phasenzeitunterschied von Schreib- und Lesezähler (mit diesem Zeitunterschied ist die Zeit gemeint, die der Lesezähler brauchen würde, um vom Stand des Schreibzählers zu seinem aktuellen Stand zu laufen) nur auf Bytetaktperioden genau liefert und die gleichmäßige Verteilung der Stopfbits eine Kenntnis dieses Unterschiedes mit der Genauigkeit einer Bittaktperiode erfordert. Als Zeitmaßstab wird hier eine Bytetaktperiode bzw. eine Bittaktperiode des Signals mit der höheren Bitrate verwendet. Verkürzend wird im vorliegenden Zusammenhang auch vom byte- oder bitgenauen Phasenunterschied gesprochen.

Das Problem des gleichmäßigen Stopfens einzelner Bits wird bei der bekannten Anordnung durch einen Regler mit I-Verhalten gelöst, der in einem Regelkreis liegt, der den Subtrahierer und den Lesezähler enthält. Bei dieser Anordnung führt das Tiefpaßverhalten des Regelkreises zu einer zeitlichen Interpolation des bytegenauen Phasenunterschiedes. Dabei ist ein Kompromiß zwischen der Qualität der Interpolation, die eine große Zeitkonstante erfordert, und einem günstigen Einschwingverhalten bzw. dynamischem Verhalten dieses Regelkreises zu finden.

Der Erfindung liegt die Aufgabe zugrunde, einen Regler für die eingangs genannte Anordnung anzugeben, der dem zugehörigen Regelkreis ein besseres Einschwingverhalten gibt und gleichzeitig eine bitgenaue Angabe des Phasenunterschiedes erlaubt.

Diese Aufgabe wird dadurch gelöst, daß der Regler
a) einen Mittelwertbildner enthält, der dafür vorgesehen ist, über ein vorbestimmtes Zeitintervall einen Mittelwert oder eine zu diesem Mittelwert proportionale Größe des Ausgangssignals des Subtrahierers zu bestimmen,
b) einen Spurzahlzähler enthält, der dafür vorgesehen ist, mit seinem Stand die Auswahlmatrix zu steuern, die gestopften Bits modulo n zu zählen und den Lesezähler nach jeweils n gestopften Bits für einen Takt anzuhalten,
c) Mittel umfaßt, die dafür vorgesehen sind, den Mittelwert oder die zu ihm proportionale Größe und den Stand des Spurzahlzählers gegeneinander aufzurechnen und das Ergebnis als Stopfinformation und als Vorbereitungssignal zur Weiterstellung des Spurzahlenzählers zu verwenden.

Das Ausgangssignal des Subtrahierers ist so skaliert, daß es die Abweichung der Zählerstandsdifferenz von ihrem Sollwert bzw. die Abweichung des Phasenunterschiedes von seinem Sollwert bytegenau (wiederum wird nur n = 8 betrachtet) angibt (zur näheren Beschreibung des Subtrahierers vergleiche z.B. die DE-A 39 42 883). Beim Bilden z.B. des arithmetischen Mittels aller Zählerstandsdifferenzen geben die Nachkommastellen - also die Bruchteile der Bytes - die Anzahl der Bits an, um die der Phasenzeitunterschied während des vorbestimmten Zeitintervalls vom Sollwert im Mittel abgewichen ist.

Jedoch ist dieser Mittelwert insofern ein nomineller Mittelwert der Phasenzeitdifferenz, als die mit der Auswahlmatrix einzeln gestopften und im Spurzahlzähler modulo 8 gezählten Bits sich beim Lauf des Lesezählers nur dann bemerkbar machen, wenn ihre Zahl ein ganzes Vielfach von 8 beträgt; der Lesezähler wird dann für einen Bytetakt angehalten. Anderenfalls werden sie rein rechnerisch berücksichtigt, in dem sie gegen den nominellen Mittelwert aufgerechnet werden.

Diese Aufrechnung erfolgt nach einer Ausgestaltung der Erfindung durch einen programmierten Festwertspeicher, dem der Stand des Spurzahlzählers als Adresse zugeführt wird und in dessen Speicherstellen eine Tabelle abgelegt ist, mit deren Hilfe sich der Mittelwert der bisher gestopften Bits in Einheiten von Bytes ergibt. Auf diese Weise wird der Mittelwert der gestopften Bits mit dem vom Mittelwertbildner gelieferten mittleren (nominellen) Phasenzeitdifferenz durch einen Komparator vergleichbar. Vom Ausgang dieses Vergleichs hängt es nun ab, ob bei der nächsten Möglichkeit ein weiteres Bit gestopft wird oder nicht.

Bei einer weiteren Anordnung zur Aufrechnung wird der Stand des Spurzahlzählers wie Nachkommastellen des Ausgangssignals des Subtrahierers behandelt. Dazu muß der Mittelwertbildner höchstens um soviele Eingänge erweitert werden, wie der Spurzahlzähler Ausgänge zur Angabe seines Standes hat. Werden diese Ausgänge mit den Eingängen für die Nachkommastellen des Mittelwertbildners verbunden, so bedeutet das, daß die Anzahl der bisher gestopften Bits zur nominellen Phasenzeitdifferenz - umgerechnet in Einheiten Bytes - hinzuaddiert wird. Mit den Vor- und Nachkommastellen wird dann wie bisher der Mittelwert gebildet, dessen Größe ausschlaggebend dafür ist, ob bei der nächstmöglichen Gelegenheit ein Bit gestopft wird oder nicht.

Das Hinzuaddieren der Anzahl der schon gestopften Bits als Nachkommastellen setzt voraus, daß der Subtrahierer den Stand des Lesezählers vom Stand des Schreibzählers abzieht. In diesem Fall wird mit schneller wachsendem Stand des Lesezählers die (nominelle) Phasenzeitdifferenz negativ. Da aber die gestopften Bits verkürzend auf die Phasenzeitdifferenz wirken, müssen sie als positiver Beitrag hinzuaddiert werden.

Anhand der Figuren soll die Erfindung nun näher erläutert werden.

Es zeigt:
Fig. 1 das Prinzipschaltbild einer Anordnung zur Bitratenanpassung mit einer Stopfentscheidungsschaltung nach der Erfindung,
Fig. 2 ein erstes Ausführungsbeispiel für einen Regler nach der Erfindung und
Fig. 3 ein zweites Ausführungsbeispiel für einen Regler gemäß der Erfindung.

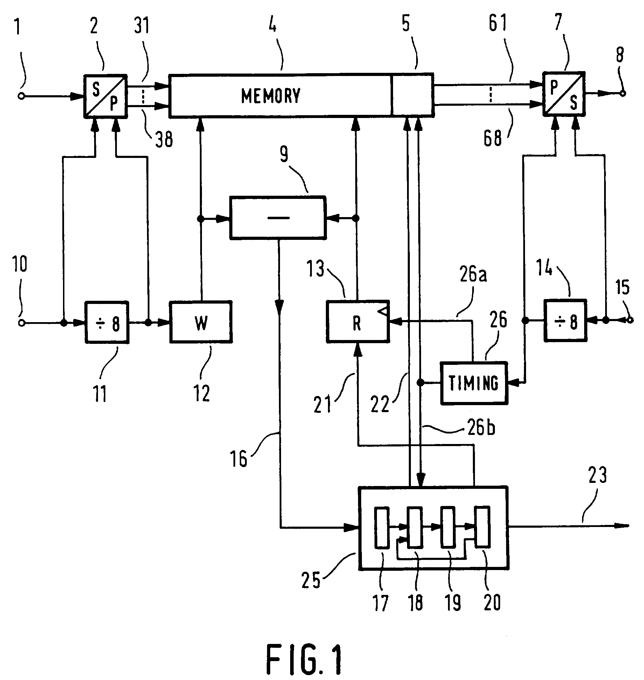

In Fig. 1 liegt an einer Klemme 1 ein erstes binäres Signal mit einer nominellen Bitrate von 139,264 Mbit/s an und an einer Ausgangsklemme 8 ein nach Rahmen strukturiertes zweites binäres Signal mit einer nominellen Bitrate von 155,52 Mbit/s. Das zweite Binärsignal enthält neben sämtlichen Bits des ersten Signals Stopfbits, Stopfinformationsbits sowie weitere Hilfinformationen. Der Rahmen ist der sogenannte synchrone Transportmodul STM-1 (vergleiche hierzu das weiter oben angegebene Zitat). Die Struktur, mit der das 139,264 Mbit/s-Signal in einer Rahmenzeile abgelegt ist, zeigt Fig. 5.3/G.709 der CCITT-Empfehlung G709.

An einer Klemme 10 liegt der Bittakt des ersten Signals an. Dieser Takt wird durch einen ersten Teiler 11 im Verhältnis 1:8 untersetzt (n = 8). Der untersetzte Takt - nachfolgend Schreibtakt genannt - hat eine Impulsfolgefrequenz von 17,408 MHz. Im vorliegenden Beispiel hat also die ganzzahlige Variable n der allgemeinen Lehre den Wert 8.

Mit dem Schreibtakt und dem ursprünglichen Bittakt wird ein Serien-Parallel-Wandler 2 versorgt, der acht serielle Bits des ersten Signals in acht parallele Bits umwandelt, die über Leitungen 31 bis 38 an acht Schreibeingänge eines Pufferspeichers 4 (elastischer Speicher) geführt werden. Auf jeder der Leitungen 31 bis 38 liegen Bits mit der Folgefrequenz von 17,408 MHz an, so daß alle Bausteine - bis auf einen ausgangsseitigen Parallel-Serien-Wandler 7 und einen ausgangsseitigen Frequenzteiler 14 - in verlustarmer CMOS-Technologie ausgeführt sind.

Mit dem Schreibtakt wird ein erster Adressenzähler 12 - im folgenden Schreibzähler genannt - weitergestellt, der zyklisch Schreibadressen für den acht Bit breiten Pufferspeicher 4 erzeugt. Unter dem vom Schreibzähler 12 erzeugten Schreibadressen wird das erste Signal byteweise in den Pufferspeicher 4 abgelegt. Der Bittakt des zweiten Binärsignals, der an einer Klemme 15 anliegt, wird an den zweiten Teiler 14 geleitet, der diesen Takt ebenfalls im Verhältnis 1 : 8 herunterteilt. Dieser geteilte Takt mit einer Impulsfolge von 19.44 Mbit/s - nachfolgend Lesetakt genannt - und der an der Klemme 15 anliegende Bittakt takten den Parallel-Serien-Wandler 7, der das parallel verarbeitete erste Signal in das serielle zweite Signal mit einer Bitrate von 155,52 Mbit/s wandelt und an eine Ausgangsklemme 8 weiterleitet. Der Lesetakt speist eine Zeitablaufsteuerung 26, die aus einem Zähler und einem angeschlossenen Decoder besteht. Der Decoder decodiert den Stand des Zählers und gibt bei vorbestimmten Zählerständen Impulse ab, die der Markierung bestimmter Bytes innerhalb des STM-1-Rahmens bzw. innerhalb einer Zeile dienen. Zeitablaufsteuerungen dieser Art sind dem Fachmann bekannt (vergleiche z.B. die DE 39 42 883 oder die DE 39 42 885); deshalb soll hier auf eine genauere Beschreibung der Zeitablaufsteuerung 26 verzichtet werden.

Impulse der Zeitablaufsteuerung 26 werden über eine Leitung 26a einem Lesezähler 13 und über eine Leitung 26b einer Auswahlmatrix 5 und einem Regler 25 zugeführt. Diese Impulse werden an die Vorbereitungseingänge der genannten Bausteine geführt und sorgen somit für den zeitgenauen Ablauf ihrer Funktionen. Der Zähltakt für den Lesezähler wird zum Beispiel mit den Impulsen der Ablaufsteuerung 26 unwirksam geschaltet, d.h der Zähler wird angehalten. Dadurch wird ein Byte aus dem Pufferspeicher ein zweites Mal ausgelesen und kann durch einen nicht gezeigten Multiplexer später mit Rahmeninformationen überschrieben werden. Der von Auswahlmatrix 5 durchzuführende Spurtausch kann höchstens dann erfolgen, wenn die Zeitablaufsteuerung 26 über die Leitung 26b den erforderlichen Impuls dafür aussendet. Auf ähnliche Weise werden die Funktionen der Bausteine des Reglers 25 gesteuert, wie weiter unten noch deutlicher werden wird.

Der Lesetakt wird zur zyklischen Erzeugung von Leseadressen durch den Adressenzähler 13 verwendet. Der Übersicht halber ist die Taktung des Lesezählers 13 durch den Lesetakt - also durch das Ausgangssignal des Teilers 14 - nur angedeutet. Gleiches trifft für weiter unten erwähnte Bausteine zu, die ebenfalls mit dem Lesetakt getaktet werden.

Ein Vergleich der Schreibadressen mit den Leseadressen findet in einem Subtrahierer 9 statt, der den Stand des Lesezählers vom Stand des Schreibzählers abzieht. Da die Zähler 12 und 13 mit unterschiedlichen Taktfrequenzen arbeiten, umfaßt der Subtrahierer 9 eine Synchronisationsschaltung, die den Stand des Zählers 12 auf den Lesetakt bezieht. Diese Synchronisationsschaltung enthält einen Umcodierer, der den Stand des Zählers 12 zunächst in einen einschrittigen Zwischencode (den Gray-Code) umwandelt und nach Abtastung mit dem Lesetakt wieder in einen zur Subtraktion geeigneten Code (z.B. den Dualcode) zu-rückwandelt. Die Codeumwandlung führt bei halbem Füllstand des Puffers, d.h., bei maximalem Abstand der Adressen der Zähler 12 und 13 zum Wert Null als Differenz. Dieser halbe Pufferfüllstand bildet den Sollwert einer Regelung, auf die nun näher eingegangen werden soll. Eine genauere Beschreibung des Subtrahierers findet man in der schon zitierten DE-A-39 42 883.

Die Einhaltung des Sollwertes erfolgt mit einem Regelkreis, der durch den Regler 25 den Lesezähler 13 und den Sübtrahierer 9 gebildet wird. Da der Lesetakt der schnellere Takt ist, wird der Lesezähler 13 von Zeit zu Zeit - gesteuert von der Zeitablaufsteuerung 26 - angehalten, damit sein Stand mit dem Stand des Schreibzählers 12 ungefähr übereinstimmt. Wenn der Unterschied zwischen Schreib- und Lesezählerstand längere Zeit negativ gewesen ist, wird in das zweite Signal an vorbestimmter Stelle ein sogenanntes variables Stopfbit eingefügt, und zwar mit Hilfe der Auswahlmatrix 5, wie oben schon angedeutet.

Mit einem Impuls (Stand des Spurzahlzählers 20) über die dreiadrige Leitung 22 wird das Einfügen eines (variablen) Stopfbits angefordert und durch einen weiteren Impuls auf der Leitung 26b wird die Auswahlmatrix 5 in einen Zustand gebracht, in dem ein Bit auf einer vorbestimmten Leitung von acht parallelen Leitungen wiederholt und als Stopfbit mit übertragen wird (Näheres zur Auswahlmatrix: vergleiche die schon zitierte DE-A-39 20 391).

Der Regler 25 selbst - der auch als Stopfentscheidungsschaltung im engeren Sinne angesprochen werden könnte - besteht aus einem Mittelwertbildner - hier als Akkumulator 17 ausgebildet - einem Spurzahlzähler 20, der die gestopften Bits modulo 8 zählt, aus Mitteln 18, mit denen der Stand des Spurzahlzählers 20 gegen das Ausgangssignal des Akkumulators 17 aufgerechnet wird, und aus einem Register 19, in dem das Ergebnis der Aufrechnung abgespeichert wird. Die Weiterverarbeitung diese Ergebnisses besteht einerseits in der Abgabe eines Signals über eine Leitung 23 als Stopfinformation dennicht gezeigten Multiplexer, der in Abhängigkeit von der Stopfinformation die Stopfinformationsbits setzt, und andererseits in der Weiterstellung des Spurzahlzählers 20.

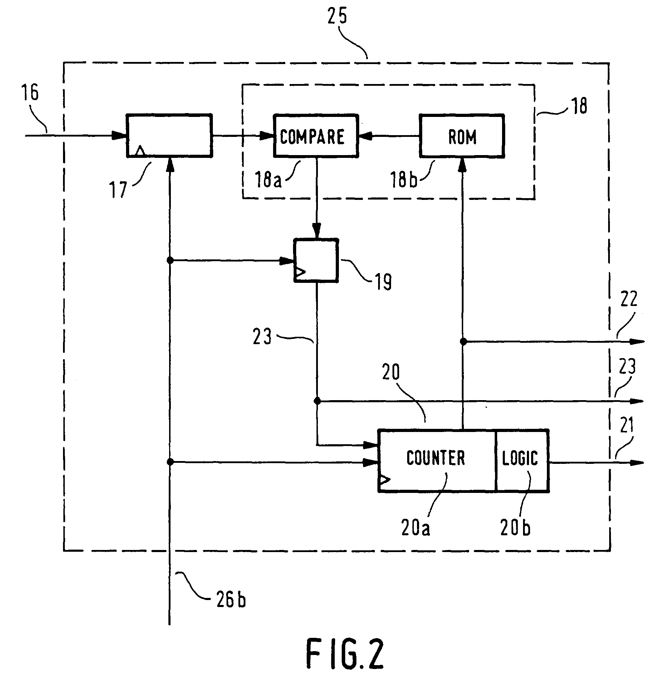

Eine erste Ausführungsform des Reglers 25 zeigt Fig. 2. Die Einordnung der gezeigten Ausführungsform des Reglers 25 in eine Schaltungsanordnung nach Fig. 1 wird dadurch ohne Schwierigkeiten möglich, daß die abgehenden und ankommenden Leitungen des Reglers 25 die gleichen Bezugsszeichen haben wie die Leitungen in Fig. 1. Bausteine, die nach Fig. 1 eine Funktionseinheit bilden, haben in Fig. 2 ebenfalls die gleichen Bezugszeichen wie in Fig. 1.

Bei dem Akkumulator 17 handelt es sich um eine Standardausführung mit einem Addierer und einem nachgeschalteten, getakteten Register. Der Addierer hat einen ersten und einen zweiten Eingang. Dem ersten Eingang werden die Daten auf der Leitung 16 zugeführt, während der Ausgang des getakteten Registers auf den zweiten Eingang des Addierers rückgekoppelt ist. Getaktet wird der Akkumulator mit dem Lesetakt. Beim Auftreten eines Zeilenimpulses auf der Leitung 26b wird der Inhalt des Akkumulators durch öffnen der internen Rückkopplung und Anlegen einer Null an den zweiten Eingang gelöscht.

Im vorliegenden Ausführungsbeispiel bestimmt der Mittelwertbildner 17 bzw. der Akkumulator 17 eine zum arithmethischen Mittel proportionale Größe, nämlich die Summe der Ausgangswerte des Sübtrahierers 9. Diese Summe besteht aus 270 Summanten, denn bei einem STM-1-Rahmen ist pro Rahmenzeile, die 270 Bytetaktperioden lang ist, einmal zu entscheiden, ob die dafür vorgesehene Stopfstelle mit einem (variablen) Stopfbit oder einem Datenbit zu besetzen ist. Um das arithmetische Mittel zu erhalten müßte die genannte Summe noch durch 270 dividiert werden. Diese Division unterbleibt jedoch an dieser Stelle und wird bei Aufrechnung der Summe gegen die schon gestopften Bits durch eine Multiplikation mit dem Faktor 270 berücksichtigt, wie nun näher erläutert wird.

Die Mittel 18 zur Aufrechnung bestehen aus einem Komparator 18a, dem das Ausgangssignal des Akkumulators 17 zugeführt wird und mit dem die Ausgangsdaten eines ROM's 18b verglichen werden. Dem ROM 18b wird der Stand des Spurzahlzählers 20 über die dreiadrige Leitung 22 als Adresse zugeführt. Durch die im ROM abgelegten Tabellen werden die bisher einzeln gestopften Bits (also der Stand der Spurzahlzählers 20) in Bruchteile von gestopften Bytes umgerechnet, damit sie dem Komparator 18a miteinander vergleichbare Größen zugeführt werden.Am Ende einer Zeile eines STM-1-Rahmens wird das Ergebnis des Vergleichs in das Register 19 übernommen, das vom Lesetakt getaktet wird, der jedoch nur bei Anwesenheit eines Impulses auf der Leitung 26b wirksam wird. Als Vergleichsergebnis wird eine binäre Eins verwendet, wenn die Summe der Eingangssignale des Kompators 18a kleiner null ist und eine binäre Null, wenn diese Summe größer oder gleich null ist. Ist im Register 19 eine binäre Eins gespeichert, wird bei der nächsten Gelegenheit (durch den nicht gezeigten Multiplexer) eine variables Stopfbit eingefügt. Steht im Register 19 eine binäre Null, wird nicht gestopft. Der im Register 19 gespeichert Binärwert wird auch einem ersten Vorbereitungseingang des Spurzahlzählers 20 zugeführt. Soll gestopft werden, wird der Spurzahlzähler 20 durch das Signal am ersten Vorbereitungseingang um zwei Einheiten heraufgesetzt, so bald auch an einem zweiten Vorbereitungseingang der Zeilenimpuls auf der Leitung 26b anliegt. Soll nicht gestopft werden, so wird der Zähler bei Anwesenheit eines Impulses am zweiten Vorbereitungseingang nur um eine Einheit weitergestellt. Dieses Weiterstellen entspricht dem Einfügen eines festen und variablen Stopfbits in das zweite Binärsignal oder dem Einfügen nur des festen Stopfbits.

Der Zähler 20 gliedert sich in zwei Einheiten, eine Zähleinheit 20a und eine Übertragslogik 20b. Die Übertragslogik gibt beim Überschreiten des Zählers über den Stand 7 einen Impuls über die Leitung 21 ab, mit dem der Lesezähler 13 für einen Takt angehalten wird. Gleichzeitig wird über eine nicht gezeigte Leitung die Auswahlmatrix in einen Zustand gebracht durch den verhindert wird, daß im zweiten Binärsignal durch Wiederholung des gleich Bytes eine Informationslücke von der Länge eines Bytes entsteht.

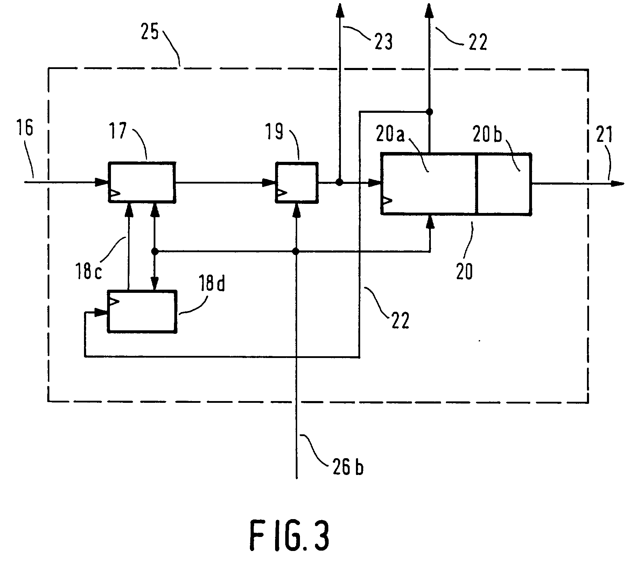

Fig. 3 zeigt eine weitere Variante des Reglers 25. Sie unterscheidet sich von der Variante nach Fig. 2 durch eine andere Art der Aufrechnung des Mittelwertes gegen den Stand des Spurzahlzählers 20. Entsprechend dieser Art werden auch andere Mittel eingesetzt, und zwar ein zweiter Akkumulator 18d, durch den der Stand des Spurzahlzählers 20 genauso behandelt wird wie das Ausgangssignal des Subtrahierers 9. Die Überträge des Sübtrahierers 18 werden über eine Leitung 18c auf den Akkumulator 17 übertragen, und zwar auf dessen niederwertigste Binärstelle. Diesen Maßnahmen liegen folgende Überlegungen zugrunde: Wird durch den Subtrahierer 9 der Stand des Schreibzählers vom Stand des Lesezählers abgezogen, so liefert der Mittelwertbildner 17 am Ende einer Zeile die im Mittel zu stopfenden Bytes, vorausgesetzt dieser Mittelwert ist negativ. Gegen diesen Mittelwert müssen die schon gestopften Bits in Einheiten Bytes aufgerechnet werden, das heißt, in Einheiten Bytes addiert werden. Diese Addition wird durch den Akkumulator 18d zusammen mit der Übertragsleitung 18c durchgeführt. Der Stand des Spurzahlzählers 20 wird behandelt wie Bruchteile von Bytes (Nachkommastellen), die zu den Ausgangsdaten des Sübtrahierers 9 hinzuzuaddieren sind. Die Akkumulatoren 17 und 18d wirken wie ein einheitlicher Akkumulator, der am Ende einer Rahmenzeile über Impulse der Leitung 26b gelöscht wird und von dessen Inhalt nur das Vorzeichen in das Register 19 übernommen wird. Da nur das Vorzeichen übernommen wird, kann auch in diesem Fall die Division durch 270 unterbleiben, da sie das Vorzeichen unverändert läßt.

Die Funktion der beschriebenen Schaltung kann auch ganz oder teilweise durch einen entsprechend programmierten Rechner übernommen werden. Das Erstellen des oder der Programme gehört im vorliegenden Fall zum handwerklichen Können des Fachmanns, da die gesamte Schaltung nur aus elementaren digitalen Bausteinen besteht und deren softwaremäßige Nachbildung entweder aus der Literatur bekannt ist oder durch sie nahegelegt wird.

Vergleiche hierzu als Beispiele:
1) Tanski, T.R.: "11-byte program generates 2 billion pseudo-random bits". Elektronics, Oktober 12 (1978), Seite 148.
2) Fliege, N.: "Digitale Filter mit dem Signalprozessor 2920". Elektronik (1981), Seiten 81 bis 85 und Seiten 89 bis 94.
3) Müller, K.-H.: "Echtzeitsimulation mit dem Analog-Prozessor 2920". Elektronik (1981), Seiten 95 bis 98.
4) "Signal Processing Algorithms". Prentice-Hall., Inc., Englewood Cliffs, New Yersey 07632.
5) Oberhofer, A.: "Zustandsregelung mit digitalen Filtern". Elektronik (1985), Seiten 63 bis 68.
6) Handbücher der Daisy Systems Corporation "Simulation Compilation". August 1988 und "Daisy Behavioral Language". September 1988.

Die Angabe der Signalflußrichtung in den Figuren und die Charakterisierung der einzelnen Funktionsblöcke durch ihre signalverändernde Wirkungsweise sind für den Fachmann Mittel, die beim heutigen Stand der Simulationstechnik und dem Stand der höheren Programmiersprachen (C, Fortran, Basic, DSPARC, DABL) zu einem Flußdiagramm äquivalent sind.

## Patentansprüche

1. Stopfentscheidungsschaltung für eine Anordnung zur Bitratenanpassung zweier Signale mit
- einem elastischen Speicher (4), der dafür vorgesehen ist, daß in ihm die Daten eines ersten Signals in Gruppen von je n Bits (n > 1) parallel eingeschrieben und parallel wieder ausgelesen werden,
- einer Auswahlmatrix (5) zum Einfügung von Stopfbits, die dem elastischen Speicher (4) nachgeschaltet ist,
- einem Schreibzähler (12) zur Steuerung des Schreibvorganges und einem Lesezähler (13) zur Steuerung des Lesevorganges,
- einem Subtrahierer (9), der dafür vorgesehen ist, die Differenz der Zählerstände zu bilden,
- einem Regelkreis, der den Subtrahierer (9), einen Regler (25) und den Lesezähler (13) enthält,
dadurch gekennzeichnet,
daß der Regler (25)
a) einen Mittelwertbildner (17) enthält, der dafür vorgesehen ist, über ein vorbestimmtes Zeitintervall einen Mittelwert oder eine zu diesem Mittelwert proportionale Größe des Ausgangssignals des Subtrahierers (9) zu bestimmen,
b) einen Spurzahlzähler (20) enthält, der dafür vorgesehen ist, mit seinem Stand die Auswahlmatrix (5) zu steuern, die gestopften Bits modulo n zu zählen und den Lesezähler (13) nach jeweils n gestopften Bits für einen Takt anzuhalten,
c) Mittel (18) umfaßt, die dafür vorgesehen sind, den Mittelwert oder die zu ihm proportionale Größe und den Stand des Spurzahlzählers (20) gegeneinander aufzurechnen und das Ergebnis als Stopfinformation und als Vorbereitungssignal zur Weiterstellung des Spurzahlzählers (20) zu verwenden.

2. Stopfentscheidungsschaltung nach Anspruch 1,
gekennzeichnet durch,
- eine in einem Festwertspeicher (18b) abgelegte Tabelle oder einen Multiplizierer, die dafür vorgesehen sind, den Stand des Spurzahlzählers (20) in eine Größe zu transformieren, die mit dem Mittelwert oder mit der zu ihm proportionalen Größe vergleichbar ist,
- einen Komparator (18a), der dafür vorgesehen ist, den transformierten Zählerstand mit dem Mittelwert, oder mit der zu ihm proportionalen Größe zu vergleichen,
- ein Register (19) zur Speicherung des Ausgangssignal des Komparators (18a).

3. Stopfentscheidungsschaltung nach Anspruch 1,
gekennzeichnet durch folgende Merkmale,
- der Mittelwertbildner (17) ist um mindestens einen Eingang (18c) für mindestens eine Nachkommastelle erweitert,
- die Eingänge für die Nachkommastellen sind mit den Ausgängen für den Stand des Spurzahlzählers (19) verbunden,
- ein Register (19), das dafür vorgesehen ist, mindestens das höchstwertigste Bit des Mittelwertbildners (17) nach Ablauf des vorbestimmten Zeitintervalls zu übernehmen.

4. Stopfentscheidungsschaltung nach einem der vorhergehenden Ansprüche,
gekennzeichnet durch,
programmierte Rechner, die dafür vorgesehen sind, die Funktionen der einzelnen Bausteine entweder ganz oder teilweise zu übernehmen.

## Claims

1. Stuffing decision circuit for an arrangement for adapting the bit rate of two signals. The arrangement for adapting the bit rate comprises:
- an elastic store for writing in parallel the data of a first signal in groups of n bits (n ≥ 1) and reading them again in parallel,
- a selection matrix for inserting stuff bits, which is connected downstream of the elastic store,
- a write counter for controlling the writing operation and a read counter for controlling the reading operation,
- a subtracter which forms the difference between the counts,
- a control circuit which includes the subtracter, a controller and the read counter,
characterized in that the controller
a) comprises a mean value determining circuit for determining, over a predetermined time interval, a mean value or a magnitude proportional to this mean value of the output signal of the subtracter,
b) comprises a track counter for controlling the selection matrix in response to its track count, for counting modulo-n the stuffed bits, and for stopping the read counter for one clock period each time after n stuffed bits, and
c) comprises means for offsetting the mean value or the magnitude proportional thereto against the count of the track counter and for using the result of the offset as justification information and as a preparation signal for incrementing the track counter.

2. Stuffing decision circuit as claimed in Claim 1, characterized by
- a table stored in a read-only memory (18b) or a multiplier which transform the count of the track counter (20) into a magnitude comparable to the mean value, or to the magnitude proportional to the mean value,
- a comparator (18a) for comparing the transformed count with the mean value or with the magnitude proportional thereto, and
- a register (19) for storing the output signal of the comparator (18a).

3. Stuffing decision circuit as claimed in Claim 1, characterized by the following features:
- the mean value determining circuit (17) is extended by at least one input (18c) for at least one digit after the decimal point
- the inputs for the digits after the decimal point are connected to the outputs for the count of the track counter (19), and
- a register (19) takes over at least the most significant bit of the mean value determining circuit (17) after the predetermined time interval has ended.

4. Stuffing decision circuit as claimed in one of the preceding Claims, characterized in that the functions of the individual building blocks are taken over completely or in part by a programmable computer.

## Revendications

1. Circuit de décision de justification pour un dispositif d'adaptation du débit binaire de deux signaux avec
- une mémoire élastique (4) qui est prévue pour y sauver parallèlement et lire parallèlement les données d'un premier signal dans des groupes de, respectivement, n bits (n ≥ 1),
- une matrice de sélection (5) pour l'introduction de bits de justification, qui est montée en aval de la mémoire élastique (4),
- un compteur d'écriture (12) pour la commande de l'opération d'écriture et un compteur de lecture (13) pour la commande de l'opération de lecture,
- un soustracteur (9) qui est prévu pour former la différence des états des compteurs,
- un circuit de réglage qui comprend le soustracteur (9), un régulateur (25) et le compteur de lecture (13),
caractérisé en ce que
le régulateur (25)
a) contient un dispositif de formation de moyennes (17) qui est prévu pour déterminer, sur un intervalle de temps défini, une moyenne ou une grandeur proportionnelle à cette moyenne du signal de sortie du soustracteur (9),
b) contient un compteur du nombre de pistes (20) qui est prévu pour commander par son état la matrice de sélection (5), compter les bits justifiés modulo n et arrêter le compteur de lecture (13) après, respectivement, n bits justifiés pour une cadence,
d) comprend des moyens (18) qui sont prévus pour imputer réciproquement la moyenne ou la grandeur proportionnelle à celle-ci et l'état du compteur du nombre de pistes (20) et utiliser le résultat comme information de justification et comme signal de préparation pour le traitement ultérieur du compteur du nombre de pistes (20).

2. Circuit de décision de justification selon la revendication 1,
caractérisé par
- un tableau sauvé dans une mémoire des constantes (18b) ou un multiplicateur qui sont prévus pour transformer l'état du compteur du nombre de pistes (20) en une grandeur qui est comparable à la moyenne ou à la grandeur proportionnelle à celle-ci,
- un comparateur (18a) qui est prévu pour comparer l'état du compteur transformé à la moyenne ou à la grandeur proportionnelle à celle-ci,
- un registre (19) pour sauver le signal de sortie du comparateur (18a).

3. Circuit de décision de justification selon la revendication 1,
caractérisé par les caractéristiques suivantes
- le dispositif de formation de moyennes (17) est étendu d'au moins une entrée (18c) pour au moins une position après la virgule,
- les entrées pour les positions après la virgule sont reliées aux sorties pour l'état du compteur du nombre de pistes (19),
- un registre (19) qui est prévu pour prendre en charge au moins le bit à la valeur la plus élevée du dispositif de formation de moyennes (17) à l'expiration de l'intervalle de temps prédéterminé.

4. Circuit de décision de justification selon l'une des revendications précédentes,
caractérisé par
des ordinateurs programmés qui sont prévus pour prendre en charge les fonctions des différents modules soit totalement, soit partiellement.
